# EUROPÄISCHE PATENTSCHRIFT

(11) **EP 1 309 403 B1**
(45) Veröffentlichungstag und Bekanntmachung des Hinweises auf die Patenterteilung: **01.12.2004**
(21) Anmeldenummer: 01949184.4
(22) Anmeldetag: 26.07.2001
(51) Int. Cl.: B01L 3/00, B01J 19/00

(54) **SCHALTBLOCK MIT MINDESTENS EINEM DARAN ANGEBRACHTEN ODER INTEGRIERTEN REAKTIONSGEFÄSS**
CONTACT UNIT COMPRISING AT LEAST ONE REACTION CONTAINER INTEGRATED THEREIN OR ATTACHED THERETO
BLOC DE COMMUTATION COMPORTANT AU MOINS UN RECIPIENT DE REACTION INTEGRE OU ASSOCIE

(30) Priorität: 19.08.2000 CH 161700
(43) Veröffentlichungstag der Anmeldung: 14.05.2003
(73) Patentinhaber: Chemspeed Ltd., 4302 Augst (CH)
(72) Erfinder: GÜLLER, Rolf, CH-5027 Herznach (CH); SCHRÖER, Josef, CH-4103 Bottmingen (CH); METZGER, Franz, CH-4055 Basel (CH)
(74) Vertreter: Bollhalder, Renato
(86) Internationale Anmeldenummer: PCT/CH2001/000461
(87) Internationale Veröffentlichungsnummer: WO 2002/016034

(56) Entgegenhaltungen:
- EP-A- 0 908 236
- WO-A-98/57738
- US-A- 5 137 698

## Beschreibung

Die vorliegende Erfindung bezieht sich auf einen Schaltblock mit mindestens einem daran angebrachten oder integrierten Reaktionsgefäss, wie er im Oberbegriff des unabhängigen Patentanspruchs I definiert ist.

Zur parallelen Durchführung einer Vielzahl von chemischen, biochemischen, biologischen oder physikalischen Verfahren werden beispielsweise Laborautomaten mit Schaltblöcken verwendet, an denen eine Vielzahl von Reaktionsgefässen angebracht sind. Ein bekannter Schaltblock, wie er z. B. in der WO 98/57738 derselben Anmelderin beschrieben ist, umfasst zuunterst eine Reaktionsplatte, an der die Reaktionsgefässe über Kupplungsteile befestigt sind, auf-der Reaktionsplatte aufliegend eine Schieberplatte als verschiebbares Funktionsteil, anschliessend eine Gegenplatte und schliesslich noch eine Stützplatte. Die Reaktionsplatte, die Gegenplatte und die Stützplatte sind fest miteinander verbunden, während die Schieberplatte über ein an einer Stirnseite zwischen der Reaktionsplatte und der Gegenplatte herausragendes Betätigungselement in verschiedene Stellungen verschiebbar ist. In einer dieser Schieberplattenstellungen sind die Reaktionsgefässe durch die Schieberplatte verschlossen, während in einer anderen, offenen Stellung ein Zugriff auf die Reaktionsgefässe in gerader Linie möglich ist. In einer weiteren Stellung sind die Reaktionsgefässe mit einem Gaskanal verbunden.

Diese bekannten Schaltblöcke mit daran angebrachten Reaktionsgefässen haben sich in der Praxis bewährt, weisen aber den Nachteil auf, dass bei einem hohen Überdruck in den durch die Schieberplatte verschlossenen bzw. mit dem Gaskanal verbundenen Reaktionsgefässen darin enthaltenes Gas entweichen kann. Die Schaltblöcke sind daher ungeeignet für Verfahren, bei denen in den Reaktionsgefässen hohe Überdrücke entstehen bzw. die Reaktionsgefässe mit hohen Überdrücken beaufschlagt werden.

Angesichts der für gewisse Anwendungen nicht einsetzbaren bisher bekannten, oben beschriebenen Schaltblöcke mit daran angebrachten Reaktionsgefässen liegt der Erfindung die folgende Aufgabe zugrunde. Zu schaffen ist ein Schaltblock mit mindestens einem daran angebrachten oder integrierten Reaktionsgefäss der eingangs erwähnten Art, der auch für Verfahren geeignet ist, bei denen im Reaktionsgefäss hohe Überdrücke entstehen bzw. die Reaktionsgefässe mit hohen Überdrücken beaufschlagt werden.

Diese Aufgabe wird durch den erfindungsgemässen Schaltblock mit mindestens einem daran angebrachten oder intergrierten Reaktionsgefäss gelöst, wie er im unabhängigen Patentanspruch 1 definiert ist. Bevorzugte Ausführungsvarianten ergeben sich aus den abhängigen Patentansprüchen.

Die Erfindung besteht dem Wesen nach im Folgenden: Ein Schaltblock mit mindestens einem daran angebrachten oder integrierten Reaktionsgefäss umfasst einen Reaktionsblock und ein darin angeordnetes Funktionsteil, das mindestens zwischen einer offenen und einer geschlossenen Stellung verstellbar ist, wobei in der offenen Stellung ein Zugriff auf das Reaktionsgefäss in gerader Linie möglich ist. Erfindungsgemäss ist in der geschlossenen Stellung des Funktionsteils das mindestens eine Reaktionsgefäss durch den Schaltblock druckdicht verschlossen, wobei bei einem Über- oder Unterdruck im Reaktionsgefäss das Funktionsteil durch diesen Über- oder Unterdruck gegen den Reaktionsblock gedrückt oder an diesen gesogen wird.

Dadurch, dass das oder die Reaktionsgefässe in der geschlossenen Stellung des Funktionsteils druckdicht verschlossen ist bzw. sind, können auch Verfahren durchgeführt. werden, bei denen in dem oder den Reaktionsgefässen hohe Überdrücke vorhanden sind. Da bei einem Über- oder Unterdruck im Reaktionsgefäss das Funktionsteil durch diesen Über- oder Unterdruck gegen den Reaktionsblock gedrückt oder an diesen gesogen wird, gilt ausserdem, dass je höher der Über- bzw. Unterdruck ist, desto stärker werden das Funktionsteil und der Reaktionsblock gegeneinander gepresst, allenfalls mit einem Dichtelement dazwischen. Der Über- bzw. Unterdruck selbst stellt somit sicher, dass zwischen Funktionsteil und Reaktionsblock kein Gas durchdringt. Der erfindungsgemässe Schaltblock ist auch bei sehr hohen Drücken noch dicht, bei ausreichender mechanischer-Festigkeit des Reaktionsblocks und des Funktionsteils, beispielsweise durch Fertigung aus Titan, können Drücke über. 250 bar verkraftet werden.

Mit Vorteil ist das Funktionsteil im Reaktionsblock mit Spiel angeordnet, so dass es bei Normaldruck auf mindestens einer Seite, vorzugsweise der dem mindestens einen Reaktionsgefäss abgewandten Seite, nicht gasdicht am Reaktionsblock anliegt. Dies ermöglicht eine Verstellung des Funktionsteils bei Normaldruck ohne grossen Kraftaufwand.

Bei einer bevorzugten Ausführungsvariante ist das Funktionsteil eine verschiebbare Schieberplatte. Mit einer Schieberplatte kann auf einfache Weise der Zugang zu einer Vielzahl von parallelen Reaktionsgefässen gemeinsam gesteuert werden. Ausserdem erfolgt das Verstellen der Schieberplatte durch eine einfach zu realisierende lineare Bewegung.

Bei einer anderen vorteilhaften Ausführungsvariante ist das Funktionsteil eine drehbare Kugel oder ein drehbarer Zylinder. Ein solches Funktionsteil bleibt bei einer Verstellung an Ort und Stelle, sein Platzbedarf ist daher gering. Es ist also insbesondere dann von Vorteil, wenn wenig Raum zur Verfügung steht, beispielsweise dann, wenn zur Einzelsteuerung des Zugangs zu mehreren nebeneinander angeordneten Reaktionsgefässen mehrere Funktionsteile nebeneinander angeordnet sind.

Mit Vorteil ist der Reaktionsblock aus zwei oder mehr Teilen, vorzugsweise auseinandernehmbar, zusammengesetzt, zwischen denen das Funktionsteil angeordnet ist, vorzugsweise aus einer Reaktionsplatte und einer Gegenplatte, zwischen denen das Funktionsteil sandwichartig angeordnet ist, und einem Halteprofil, das über die Reaktionsplatte und die Gegenplatte geschoben ist und diese zusammenhält. Das Zusammensetzen des Reaktionsblocks aus mehreren Teilen ermöglicht eine einfachere Herstellung. Ausserdem ist er, falls er auseinandernehmbar ist, auch einfacher zu reinigen.

Bevorzugt ist zwischen Reaktionsblock und Funktionsteil mindestens ein Dichtelement, vorzugsweise aus Kunststoff, Gummi oder einem gummiähnlichen Material, insbesondere einem polyfluorierten Elastomer, angeordnet, vorzugsweise in Nuten im Funktionsteil oder im Reaktionsblock. Das mindestens eine Dichtelement sorgt für eine gute Abdichtung bei hohen Überdrücken. Das Anordnen in Nuten im Funktionsteil ermöglicht das Verstellen des Funktionsteils unter Mitnahme des mindestens einen Dichtelements. Das Anordnen in Nuten im Reaktionsblock ermöglicht das Verstellen des Funktionsteils, ohne das mindestens eine Dichtelement zu verschieben.

Gleichzeitig oder alternativ sind mindestens auf der einen. Seite die aneinander anliegenden Flächen des Funktionsteils und des Reaktionsblocks so präzise ausgebildet, dass die Flächen dicht aneinander anliegen, wobei die Flächen vorzugsweise mit Fett, Öl oder Teflonspray behandelt sind und wobei die aneinander anliegenden Flächen vorzugsweise kleiner sind als die ganzen einander, zugewandten Seiten. Auf diese Weise kann zumindest auf der einen Seite auf separate Dichtelemente verzichtet werden.

Vorteilhafterweise ist zur Verstellung des Funktionsteils dieses mit einem sich durch den Reaktionsblock hindurch nach aussen erstreckenden Betätigungselement verbunden, wobei das Betätigungselement vorzugsweise in einem über- und unterdruckfreien Bereich am Funktionsteil ansetzt. Die Verstellung des Funktionsteils erfolgt am sichersten durch ein mechanisches Betätigungselement. Dieses setzt mit Vorteil in einem über- und unterdruckfreien Bereich des Schaltblocks an, damit bei allenfalls vorhandenem Über- oder Unterdruck dieser nicht abgebaut wird. Andernfalls müsste das Betätigungselement bzw. dessen Bereich im Schaltblock zusätzlich mit einer schwieriger zu realisierenden Dichtung separat abgedichtet werden.

Bevorzugt ist in der offenen Stellung des Funktionsteils ein Zugabe- und/oder Entnahmewerkzeug und/oder eine Sonde von oben her durch den Schaltblock hindurch in das Reaktionsgefäss einführbar. Dies ermöglicht ein Zudosieren und/oder Entnehmen von Substanzen, das Zuführen von Energie und/oder das Messen von Parametern während der Durchführung einer Reaktion im Reaktionsgefäss.

Vorzugsweise ist im Reaktionsblock mindestens ein Gaskanal angeordnet, mit dem in einer Stellung des Funktionsteils ein oder mehrere Reaktionsgefässe über das Funktionsteil in Verbindung gesetzt sind, so dass sie über den Gaskanal mit Gas beaufschlagbar oder in ihnen über den Gaskanal ein Über- oder Unterdruck erzeugbar ist. Falls nur ein Gaskanal verwendet wird, hat dies den Vorteil, dass nur ein Gasversorgungssystem benötigt wird.

Bei einer vorteilhaften Ausführungsvariante ist das Funktionsteil in eine Stellung verstellbar, in der mindestens ein Reaktionsgefäss geschlossen ist und mindestens ein Reaktionsgefäss mit dem Gaskanal kommuniziert. Dies ermöglicht insbesondere das Durchführen von Filtrationew, wie in der WO 98/57738 beschrieben.

Mit Vorteil sind einem Funktionsteil parallel mindestens 2, vorzugsweise mindestens 10 Reaktionsgefässe zugeordnet. Dies ermöglicht das gemeinsame Steuern von mehreren parallelen Reaktionen.

Bei einer vorteilhaften Ausführungsvariante sind im Reaktionsblock mehrere Funktionsteile angeordnet, denen jeweils mindestens ein Reaktionsgefäss zugeordnet ist, wobei die Funktionsteile einzeln, gemeinsam oder in Gruppen betätigbar sind. Die Verwendung von mehreren Funktionsteilen erlaubt das individuelle Steuern des Zugangs zu den einzelnen Reaktionsgefässen oder Gruppen von Reaktionsgefässen. Dadurch können die durchzuführenden Reaktionen weiter diversifiziert werden. Besonders vorteilhaft ist es, die Betätigung der Funktionsteile zwischen Einzel-, gemeinsamer oder Gruppen-Betätigung umschaltbar auszugestalten. Es kann dann eine anwendungsspezifisch optimale Steuerung realisiert werden. Ein gemeinsame oder Gruppen-Betätigung hat den Vorteil, dass mit einem Antriebsmotor mehrere Funktionsteile bedient werden können.

Im folgenden wird der erfindungsgemässe Schaltblock unter Bezugnahme auf die beigefügten Zeichnungen anhand von Ausführungsbeispielen detaillierter beschrieben. Es zeigen:
- Fig. 1 -: ein erstes Ausführungsbeispiel des erfindungsgemässen Schaltblocks mit einer Schieberplatte als Funktionsteil in einer Explosionsansicht;
- Fig. 2 -: den Schaltblock von Fig. 1 in zusammengesetztem Zustand;
- Fig. 3 -: die Schieberplatte des Schaltblocks von Fig. 1 in einer Perspektivansicht von oben;
- Fig. 4 -: die Schieberplatte von Fig. 3 in einer Ansicht von unten;
- Fig. 5 -: ein Dichtelement des Schaltblocks von Fig. 1 in einer Perspektivansicht;
- Fig. 6 -: einen Querschnitt des Dichtelements von Fig. 5;
- Fig. 7 -: einen Längsschnitt durch eine Reaktionsplatte des Schaltblocks von Fig. 1;
- Fig. 8 -: die Reaktionsplatte von Fig. 7 in einer Schnittansicht gemäss der Linie I-T in Fig. 7;
- Fig. 9A -: eine Schnittansicht eines zweiten Ausführungsbeispiels des erfindungsgemässen Schaltblocks mit einem daran angebrachten Reaktionsgefäss, mit einer Schieberplatte als Funktionsteil und einem in einem über- und unterdruckfreien Bereich an dieser ansetzenden Betätigungselement bei geschlossenem Reaktionsgefäss;
- Fig. 9B -: eine Schnittansicht des Schaltblocks mit Reaktionsgefäss von Fig. 9A bei geöffnetem Reaktionsgefäss, in das ein Zugabe- und/oder Entnahmewerkzeug eingeführt ist;
- Fig. 10A -: eine Schnittansicht eines dritten Ausführungsbeispiels des erfindungsgemässen Schaltblocks mit einem daran angebrachten Reaktionsgefäss, mit einer Schieberplatte als Funktionsteil und einem in einem über- und unterdruckfreien Bereich an dieser ansetzenden Betätigungselement bei geschlossenem Reaktionsgefäss;
- Fig. 10B -: eine Schnittansicht des Schaltblocks mit Reaktionsgefäss von Fig. 10A bei geöffnetem Reaktionsgefäss, in das ein Zugabe- und/oder Entnahmewerkzeug eingeführt ist;
- Fig. 11 -: eine Schnittansicht eines vierten Ausführungsbeispiels des erfindungsgemässen Schaltblocks mit einem daran angebrachten Reaktionsgefäss, mit einer Schieberplatte als Funktionsteil und einem in einem über- und unterdruckfreien Bereich an dieser ansetzenden Betätigungselement bei mit einem Gaskanal kommunizierendem Reaktionsgefäss;
- Fig. 12 -: eine Schnittansicht eines fünften Ausführungsbeispiels des erfindungsgemässen Schaltblocks mit einem daran angebrachten Reaktionsgefäss, mit einer Schieberplatte als Funktionsteil und einem seitlich an dieser ansetzenden Betätigungselement;
- Fig. 13 -: eine schematische Draufsicht auf ein sechstes Ausführungsbeispiel des erfindungsgemässen Schaltblocks mit daran angebrachten Reaktionsgefässen, mit mehreren gemeinsam betätigten Schieberplatten als Funktionsteilen;
- Fig. 14 -: eine schematische Draufsicht auf ein siebtes Ausführungsbeispiel des erfindungsgemässen Schaltblocks mit daran angebrachten Reaktionsgefässen, mit zwei Gruppen von gemeinsam betätigten Schieberplatten als Funktionsteilen;
- Fig. 15 -: eine Schnittansicht des Schaltblocks mit Reaktionsgefässen von Fig. 13 bei geschlossenen Reaktionsgefässen;
- Fig. 16 -: eine Schnittansicht des Schaltblocks mit Reaktionsgefässen von Fig. 13 bei geöffneten Reaktionsgefässen, in die Zugabe- und/oder Entnahmewerkzeuge eingeführt sind;
- Fig. 17 -: eine Schnittansicht des Schaltblocks mit Reaktionsgefässen von Fig. 13 bei mit Gaskanälen kommunizierenden Reaktionsgefässen;
- Fig. 18 -: eine schematische Draufsicht auf ein achtes Ausführungsbeispiel des erfindungsgemässen Schaltblocks mit daran angebrachten Reaktionsgefässen, mit einzeln betätigten Schieberplatten als Funktionsteilen;
- Fig. 19 -: eine Schnittansicht des Schaltblocks mit Reaktionsgefässen von Fig. 18 bei mit Gaskanälen kommunizierenden Reaktionsgefässen;
- Fig. 20 -: eine Schnittansicht eines neunten Ausführungsbeispiels eines Schaltblocks mit Reaktionsgefässen bei geschlossenen Reaktionsgefässen;
- Fig. 21 -: eine Schnittansicht eines zehnten Ausführungsbeispiels des erfindungsgemässen Schaltblocks mit einem integrierten Reaktionsgefäss;
- Fig. 22 -: eine Schnittansicht eines elften Ausführungsbeispiels des erfindungsgemässen Schaltblocks mit einem nur teilweise dargestellten daran angebrachten Reaktionsgefäss, mit einer drehbaren Kugel als Funktionsteil bei geschlossenem Reaktionsgefäss;
- Fig. 23 -: eine Schnittansicht des Schaltblocks mit Reaktionsgefäss vow Fig. 22 gemäss der Linie II-II in Fig. 22;
- Fig. 24 -: eine Schnittansicht des Schaltblocks mit Reaktionsgefäss von Fig. 22 bei geöffnetem Reaktionsgefäss, in das ein Zugabe- und/oder Entnahmewerkzeug eingefühzt ist;
- Fig. 25 -: eine Schnittansicht des Schaltblocks mit Reaktionsgefäss von Fig. 24 gemäss der Linie III-III in Fig. 24;
- Fig. 26 -: eine Schnittansicht eines zwölften Ausführungsbeispiels des erfindungsgemässen Schaltblocks mit einem integrierten Reaktionsgefäss;
- Fig. 27 -: eine Schnittansicht eines dreizehnten Ausführungsbeispiels des erfindungsgemässen Schaltblocks mit einem nur teilweise dargestellten daran angebrachten Reaktionsgefäss, mit einem drehbaren Zylinder als Funktionsteil bei geschlossenem Reaktionsgefäss;
- Fig. 28 -: eine Schnittansicht des Schaltblocks mit Reaktionsgefäss von Fig. 27 gemäss der Linie IV-IV in Fig. 27;
- Fig. 29 -: eine Schnittansicht des Schaltblocks mit Reaktionsgefäss von Fig. 27 bei geöffnetem Reaktionsgefäss, in das ein Zugabe- und/oder. Entnahmewerkzeug eingeführt ist; und
- Fig. 30 -: eine Schnittansicht des Schaltblocks mit Reaktionsgefäss von Fig. 29 gemäss der Linie V-V in Fig. 29.

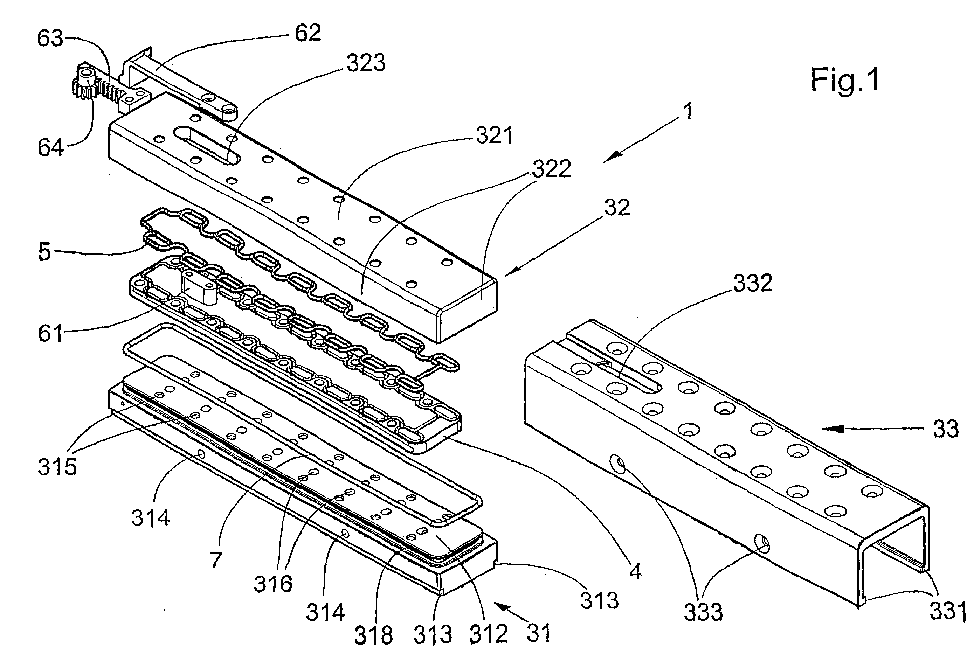

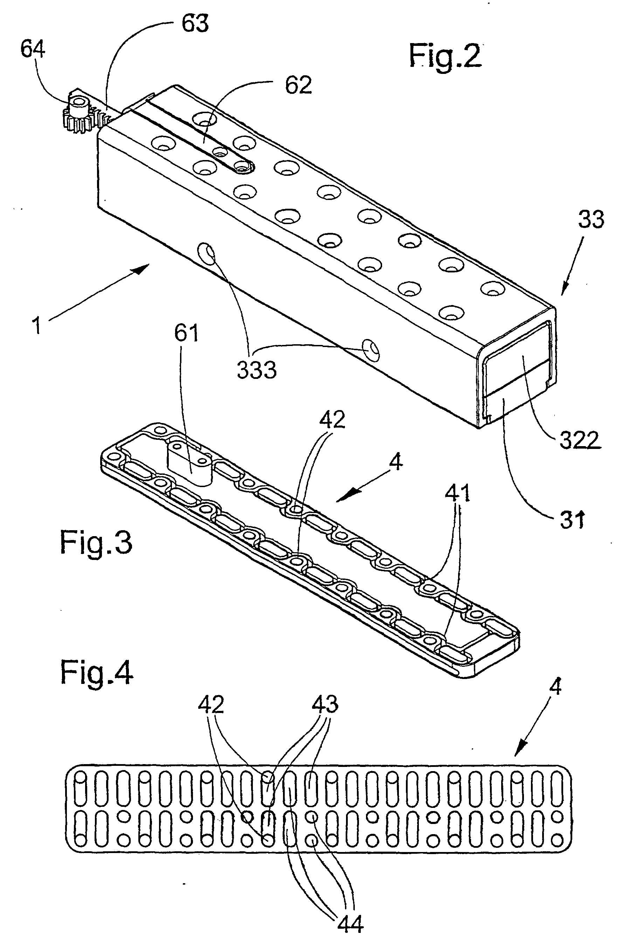

### Erstes Ausführungsbeispiel - Figuren 1 bis 8

Bei diesem ersten Ausführungsbeispiel weist ein Schaltblock 1 eine Reaktionsplatte 31 und eine Gegenplatte 32 auf, zwischen denen eine Schieberplatte 4 verschiebbar angeordnet ist. Die Gegenplatte 32 ist gehäuseartig mit einer Deckplatte 321 und vier Seitenwänden 322 ausgebildet und schliesst zusammen mit der Reaktionsplatte 31 die Schieberplatte 4 ein, wobei die Seitenwände 322 einerseits auf der Reaktionsplatte 31 aufsitzen und anderseits seitlich an einem nach oben vorstehenden Teil 312 der Reaktionsplatte 31 anliegen. Zwischen dem nach oben vorstehenden Teil 312 und den Seitenwänden 322 ist in einer Nut 318 des Teils 312 ein Dichtelement 7, vorzugsweise aus Kunststoff, Gummi oder einem gummiähnlichen Material, angeordnet, das dafür sorgt, dass die Gegenplatte 32 und die Reaktionsplatte 31 insbesondere bei sehr hohem Druck von über 250 bar dicht aneinander anliegen. Zusammengehalten werden die Gegenplatte 32 und die Reaktionsplatte 31 durch ein Halteprofil 33, das über die beiden aufeinandergesetzten Platten geschoben wird, wobei zwei Schenkel 331 des Halteprofils 33 die Reaktionsplatte 31 hintergreifen und an Schultern 313 der Reaktionsplatte 31 anliegen. Ausserdem ist das Halteprofil 33 durch nicht dargestellte Schrauben an die Reaktionsplatte 31 geschraubt, die in Schraubenlöcher 333 im Halteprofil 33 und Schraubenlöcher 314 in der Reaktionsplatte 31 geschraubt werden.

Die Reaktionsplatte 31, die Gegenplatte 32 und das Halteprofil 33 bilden zusammen einen Reaktionsblock, in dem die Schieberplatte 4 verschiebbar gefangen ist. Die Verstellung der Schieberplatte 4 erfolgt durch Drehen eines Zahnrads 64, das in eine Zahnstange 63 eingreift, an die eine Betätigungsstange 62 geschraubt ist, die an ihrem anderen Ende an einen an die Schieberplatte 4 geschraubten Betätigungszapfen 61 geschraubt ist. Der Betätigungszapfen 61 ragt durch ein Langloch 323 in der Deckplatte 321 der Gegenplatte 32 und durch ein Langloch 332 im Halteprofil 33, die jeweils so lang sind, dass die Schieberplatte 4 in alle gewünschten Stellungen verschiebbar ist. Das Zahnrad 64 wird beispielsweise durch einen nicht dargestellten Schritt- oder Linearmotor angetrieben.

Die Reaktionsplatte 3I ist mit durchgehenden Löchern 315 versehen, die in ihrem unteren, breiteren Teil durch Gewinde 317 umgeben sind. An diesen unteren Teil sind Reaktionsgefässe direkt oder über Kupplungen schraubbar. Die Reaktionsplatte 31 weist ausserdem fast über ihre ganze Länge einen vorteilhafterweise schräg verlaufenden Gaskanal 311 auf, sowie Verbindungslöcher 316, die vom Gaskanal 311 zur Oberseite der Reaktionsplatte 31 verlaufen. An das offene Ende des Gaskanals 311 können über ein Ventil, vorzugsweise Mehrfachventil, eine ensprechende Anzahl Vakuumpumpen und Gaszuführeinrichtungen angeschlossen werden.

Die an der Reaktionsplatte 31 anliegende Unterseite der Schieberplatte 4 weist ein sich achtmal wiederholendes Muster auf. Ein einzelnes Muster umfasst drei verschiedene Anordnungen von durchgehenden Löchern 42, Vertiefungen 43 und Schliessflächen 44, die im Zusammenspiel mit der Reaktionsplatte 31 verschiedene Funktionen ermöglichen, wie z.B. das Verschliessen von einem oder mehreren Reaktionsgefässen durch die Schliessflächen 44, das Offenlassen von einem oder mehreren Reaktionsgefässen, so dass in diese jeweils ein Zugabe- und/oder Entnahmewerkzeug, beispielsweise eine Nadel, zur Zugabe- und/oder Entnahme von Substanzen einführbar ist, und/oder das Verbinden von einem oder mehreren Reaktionsgefässen über Vertiefungen 43 und Verbindungslöcher 316 mit dem Gaskanal 311, um dieses bzw. diese mit einem Gas zu beaufschlagen oder unter Über- oder Unterdruck zu setzen.

Die möglichen Muster der Schieberplatte 4 und damit die möglichen Funktionen in den verschiedenen Schieberplattenstellungen werden hier nicht explizit beschrieben, da sie nicht die eigentliche Erfindung darstellen. Beispiele von Schaltblöcken mit geeigneten Mustern sind in der WO 98/57738 derselben Anmelderin beschrieben, die hiermit explizit in die vorliegende Beschreibung einbezogen wird.

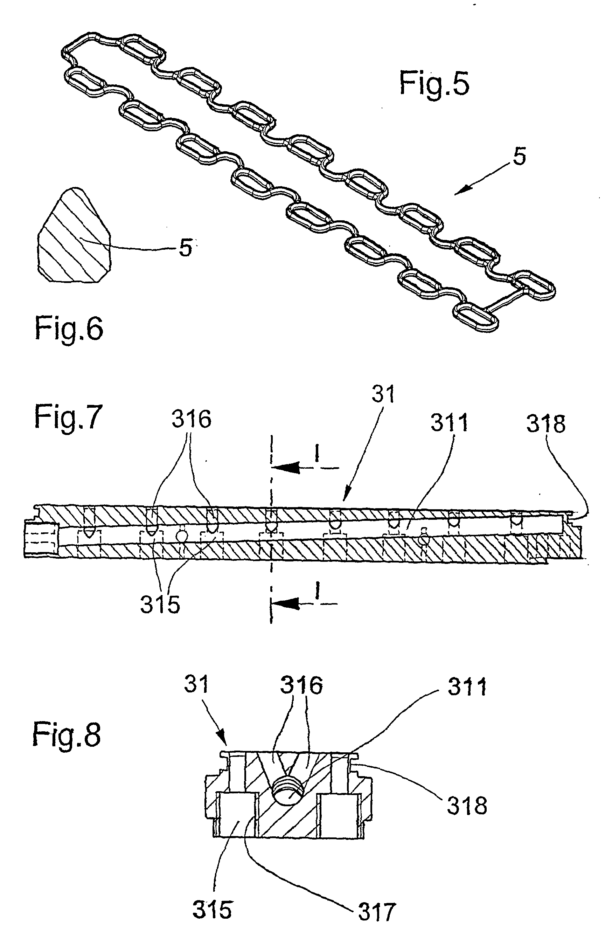

Damit der Schaltblock 1 auch bei hohen Drücken bis über 250 bar dicht ist, ist die Schieberplatte 4 auf ihrer Oberseite mit Nuten 41 versehen, in denen ein Dichtelement 5, vorzugsweise aus Kunststoff, Gummi oder einem gummiähnlichen Material, angeordnet ist. Wird in den Reaktionsgefässen ein hoher Überdruck erzeugt, entweder direkt oder über den Gaskanal 311, wird die Schieberplatte 4 zusammen mit dem Dichtelement 5 nach oben gegen die Deckplatte 321 der Gegenplatte 32 gedrückt. Das Dichtelement 5, das dabei in der Höhe komprimiert wird, sorgt für eine Abdichtung, wobei entscheidend ist, dass die Dichtwirkung umso grösser ist, desto höher der Druck ist, da das Dichtelement 5 bei höherem Druck in der Höhe stärker, komprimiert wird und dafür grossflächiger und flacher an der Deckplatte 321 anliegt. Zwar ist bei höheren Drücken der Drang eines Gases, zwischen dem Dichtelement 5 und der Deckplatte 321 bzw. der Schieberplatte 4 durchzudringen, grösser, aber gleichzeitig wird auch die Schieberplatte 4 bzw. das Dichtelement 5 aufgrund des höheren Druckes von unten stärker an das Dichtelement 5 bzw. an die Deckplatte 321 gedrückt. Dabei gilt, dass die Dichtwirkung umso grösser ist, desto grösser die dem Druck ausgesetzte Fläche ist. Damit bereits bei kleinen Überdrücken eine gute Dichtwirkung vorhanden ist, weist das Dichtelement 5 gemäss Fig. 6 vorzugsweise einen Querschnitt auf, der sich nach oben verjüngt.

Die Dichtigkeit des Schaltblocks 1 bei Unterdruck in den Reaktionsgefässen wird dadurch gewährleistet, dass die aneinander anliegenden Flächen der Schieberplatte 4 und der Reaktionsplatte 31 präzise ausgebildet sind, wobei die Flächen vorzugsweise mit Fett, Öl oder Teflonspray behandelt sind und vorzugsweise möglichst klein sind, wie dies in der WO 98/57738 beschrieben ist. Durch den Unterdruck in den Reaktionsgefässen wird die Schieberplatte 4 an die Reaktionsplatte 31 gesogen, und zwar umso stärker, desto kleiner der Unterdruck und desto grösser die ihm ausgesetzte Fläche ist.

Prinzipiell ist es selbstverständlich auch möglich, auf der Unterseite der Schieberplatte 4 ein Dichtelement vorzusehen und/oder die aneinander anliegenden Flächen der Schieberplatte 4 und der Deckplatte 321 so präzise auszubilden, klein zu gestalten und vorzugsweise mit Fett, Öl oder Teflonspray zu behandeln, dass sie auch bei hohen Druckdifferenzen dicht aneinander anliegen.

Das Dichtelement 5 ist so ausgebildet und angeordnet, dass sich die durchgehenden Löchern 42 innerhalb des abgedichteten Bereichs befinden, damit darüber kein Gas entweichen kann. Von wesentlicher Bedeutung ist, dass der Betätigungszapfen 61 in einem über- und unterdruckfreien Bereich der Schieberplatte 4 befestigt ist. Auf diese Weise kann vermieden werden, dass für den Betätigungszapfen 61 und/oder die Betätigungsstange 62 zusätzliche Dichtmittel eingesetzt oder in sie, z.B. in Form von Dichtlippen, integriert werden müssen. Hingegen ist es durchaus möglich, anstatt eines einzigen Dichtelements 5 zwischen Schieberplatte 4 und Deckplatte 321 mehrere einzelne Dichtelemente zu verwenden.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen.

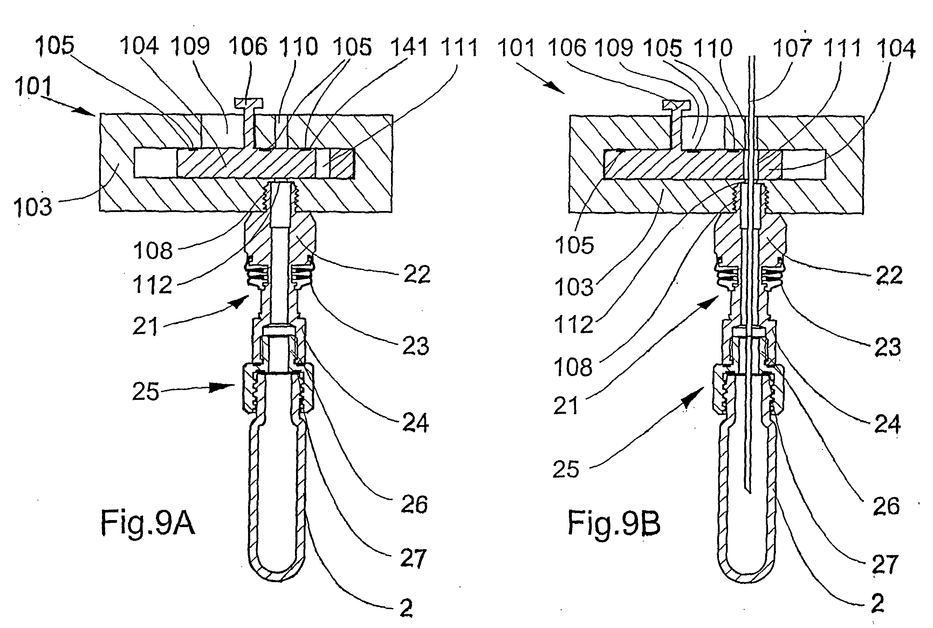

### Zweites Ausführungsbeispiel - Figuren 9A und 9B

Bei diesem zweiten Ausführungsbeispiel weist ein Schaltblock 101 einen Reaktionsblock 103 auf, in dem eine Schieberplatte 104 verschiebbar angeordnet ist. In ein Gewindeloch 108 im Reaktionsblock 103, an das zur Schieberplatte 104 hin ein gewindeloses Loch 112 anschliesst, ist eine flexible Kupplung 21 geschraubt, die ein Oberteil 22 und ein Unterteil 24 umfasst, welche durch ein Gelenk 23 beweglich miteinander verbunden sind. Das Unterteil 24 umklammert den Kopf 26 eines Verbindungsteils 25, das ein Gewindeloch 27 aufweist, in das ein Reaktionsgefäss 2 geschraubt ist. Das Reaktionsgefäss 2 ist vorzugsweise aus Metall oder aus Glas in einem Metallgehäuse, damit es mit hohen Drücken beaufschlagbar ist.

Die Schieberplatte 104 ist durch ein Betätigungselement 106 verstellbar, das sich ausgehend von der Schieberplatte 104 durch ein Langloch 109 im Reaktionsblock 103 nach aussen erstreckt. Der Antrieb des Betätigungselements.106 kann beispielsweise wie beim ersten Ausführungsbeispiel über ein Zahnrad und eine Zahnstange erfolgen. Auch bei dem vorliegenden Ausführungsbeispiel setzt das Betätigungselement 106 in einem Bereich an der Schieberplatte 104 an, der druckfrei ist, wenn das Reaktionsgefäss 2 unter Überdruck steht.

Die Schieberplatte 104 kann zwei Funktionsstellungen einnehmen. In der in Fig. 9A dargestellten ersten Funktionsstellung ist das Reaktionsgefäss 2 geschlossen. In Nuten 141 in der Schieberplatte 104 angeordnete Dichtelemente 105 dichten den Schaltblock 101 gegen aussen ab, gewährleisten also, dass kein Gas aus dem Reaittivrtsgsfäss 2 bzw. dem druckdichten Teil des Schaltblocks 101 zum Langloch 109 und zu einem Zugabe- und/oder Entnahmeloch 110 im oberen Teil des Reaktionsblocks 103 gelangen kann.

In der in Fig. 9B dargestellten zweiten Funktionsstellung ist das Reaktionsgefäss 2 offen. Durch das Zugabe- und/oder Entnahmeloch 110, ein durchgehendes Loch 111 in der Schieberplatte 104, das gewindelose Loch 112, das Gewindeloch 108, die flexible Kupplung 21 und das Verbindungsteil 25 ist ein Zugabe- und/oder Entnahmewerkzeug 107, hier eine Nadel, in das Reaktionsgefäss 2 eingeführt.

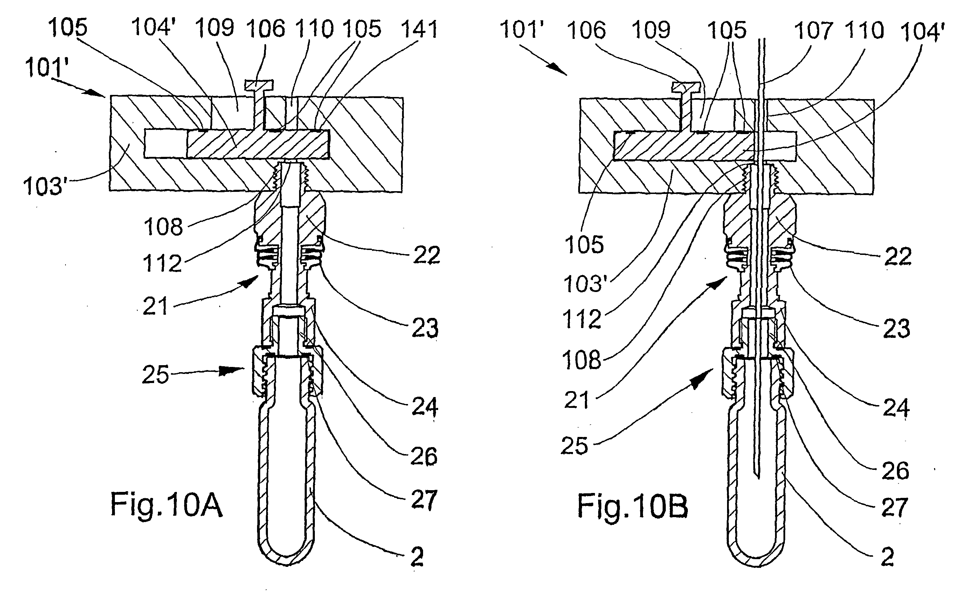

### Drittes Ausführungsbeispiel - Figuren 10A und 10B

Der Schaltblock 101' dieses dritten Ausführungsbeispiels unterscheidet sich vom Schaltblock 101 des zweiten Ausführungsbeispiels nur dadurch, dass die Schieberplatte 104' kein durchgehendes Loch 111 aufweist, dafür aber kürzer ist. Entsprechend ist das Zugabe- und/oder Entnahmewerkzeug 107 gemäss Fig. 10B durch das Zugabe- und/oder Entnahmeloch 110, neben der Schieberplatte 104' und durch das gewindelose Loch 112, das Gewindeloch 108, die flexible Kupplung 21 und das Verbindungsteil 25 in das Reaktionsgefäss 2 eingeführt. Aufgrund der kürzeren Schieberplatte 104' ist auch der die Schieberplatte 104' aufnehmende Raum im Reaktionsblock 103' kürzer.

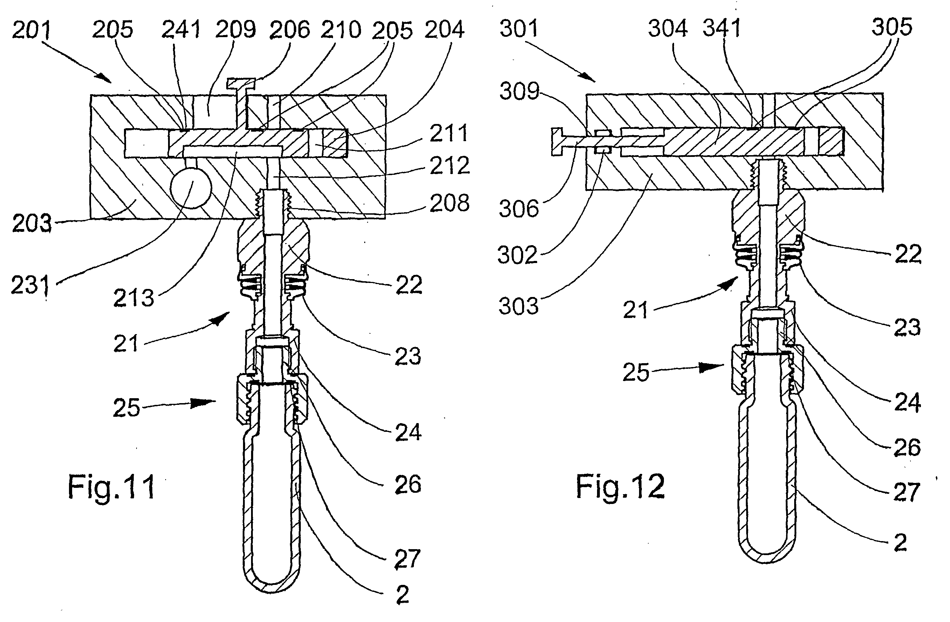

### Viertes Ausführungsbeispiel - Figur 11

Bei diesem vierten Ausführungsbeispiel weist ein Schaltblock 201 einen Reaktionsblock 203 auf, in dem eine Schieberplatte 204 verschiebbar angeordnet ist. In ein Gewindeloch 208 im Reaktionsblock 203, an das zur Schieberplatte 204 hin ein gewindeloses Loch 212 anschliesst, ist wiederum eine flexible Kupplung 21 geschraubt, die ein Oberteil 22 und ein Unterteil 24 umfasst, welche. durch ein Gelenk 23 beweglich miteinander verbunden sind. Das Unterteil 24 umklammert den Kopf 26 eines Verbindungsteils 25, das ein Gewindeloch 27 aufweist, in das ein Reaktionsgefäss 2 geschraubt ist. Das Reaktionsgefäss 2 ist vorzugsweise aus Metall oder aus Glas in einem Metallgehäuse, damit es mit hohen Drücken beaufschlagbar ist. Insbesondere bei Drücken bis ca. 20 bar kann es auch aus Glas alleine sein.

Die Schieberplatte 204 ist entsprechend dem zweiten Ausführungsbeispiel durch ein Betätigungselement 206 verstellbar, das sich ausgehend von der Schieberplatte 204 durch ein Langloch 209 im Reaktionsblock 203 nach aussen erstreckt. Auch bei dem vorliegenden Ausführungsbeispiel setzt das Betätigungselement 206 in einem Bereich an der Schieberplatte 204 an, der druckfrei ist, wenn das Reaktionsgefäss 2 unter Überdruck steht.

Die Schieberplatte 204 kann zwei Funktionsstellungen einnehmen. In der dargestellten ersten Funktionsstellung kommuniziert das Reaktionsgefäss 2 über eine Vertiefung 213 in der Schieberplatte 204 mit einem Gaskanal 231 im Reaktionsblock 203. Dem Reaktionsgefäss 2 kann so ein Gas zugegeben oder entnommen werden und es kann insbesondere mit einem Überdruck beaufschlagt oder in ihm ein Unterdruck erzeugt werden. In Nuten 241 in der Schieberplatte 204 angeordnete Dichtelemente 205 dichten den Schaltblock 201 gegen aussen ab, gewährleisten also, dass kein Gas aus dem Reaktionsgefäss 2 zum Langloch 209 und zu einem Zugabe- und/oder Entnahmeloch 210 im oberen Teil des Reaktionsblocks 203 gelangen kann.

In der nicht dargestellten zweiten Funktionsstellung, in der die Schieberplatte 204 ganz nach links geschoben ist, ist das Reaktionsgefäss 2 offen. Durch das Zugabe- und/oder Entnahmeloch 210, ein durchgehendes Loch 211 in der Schieberplatte 204, das gewindelose Loch 212, das Gewindeloch 108, die flexible Kupplung 21 und das Verbindungsteil 25 ist ein Zugabe- und/oder Entnahmewerkzeug in das Reaktionsgefäss 2 einführbar.

### Fünftes Ausführungsbeispiel - Figur 12

Der Schaltblock 301 dieses fünften Ausführungsbeispiels unterscheidet sich vom Schaltblock 101 des zweiten Ausführungsbeispiels nur dadurch, dass das Betätigungselement 306 seitlich an der Schieberplatte 304 ansetzt und durch ein Loch 309 seitlich aus dem Reaktionsblock 303 geführt ist. Hierdurch entfällt zwar ein in einer Nute 341 angeordnetes Dichtelement 305 zwischen Schieberplatte 304 und Reaktionsblock 103, doch wird eine separate, komplexere radiale Abdichtung der Durchführung des Betätigungselements 306 durch den Reaktionsblock 303 notwendig, was hier mittels eines Dichtelements 302, vorzugsweise aus Kunststoff, Gummi oder einem gummiähnlichem Material, erfolgt. Im Gegensatz zu den Dichtelementen 305 wird das Dichtelement 302 bei einem Überdruck im Reaktionsgefäss 2 nicht in der oben beschriebenen einfachen Art komprimiert, die Dichtfläche und Dichtkraft also nicht erhöht.

Im weiteren gilt das zum zweiten Ausführungsbeispiel Gesagte.

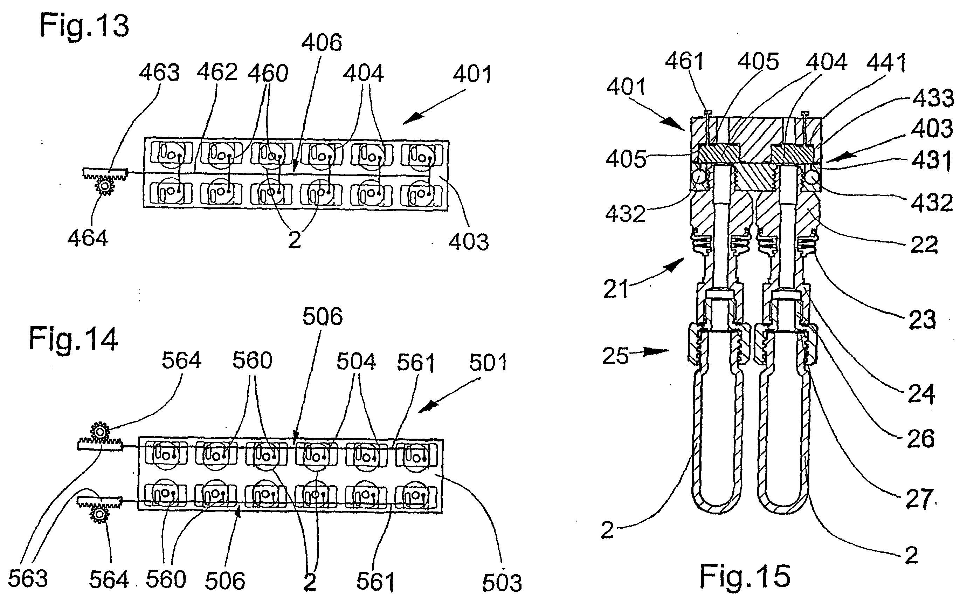

### Sechstes Ausführungsbeispiel - Figuren 13 und 15 bis 17

Ein Schaltblock 401 weist hier einen Reaktionsblock 403 auf, in dem zwölf einzelne Schieberplatten 404 verschiebbar angeordnet sind. Die Verstellung der Schieberplatten 404 erfolgt in diesem Ausführungsbeispiel gemeinsam mit einem Betätigungselement 406, das über eine Zahnstange 463 von einem Zahnrad 464 betätigt wird. Das Zahnrad 464 wird beispielsweise durch einen nicht dargestellten Schritt- oder Linearmotor angetrieben. Das Betätigungselement 406 umfasst eine mit der Zahnstange 463 verbundene Betätigungsstange 462, an der sechs dazu rechtwinklig verlaufende Querstangen 460 befestigt sind. Jeweils an den beiden Enden der Querstangen 460 ist je ein Betätigungszapfen 461 angebracht, der jeweils mit einer der Schieberplatten 404 verbunden ist. Auf diese Weise können alle zwölf Schieberplatten 404 gemeinsam betätigt werden.

Der Reaktionsblock 403 setzt sich aus zwei Teilen 431 und 433 zusammen, die miteinander werschweisst sind. In zwei parallelen Reihen sind insgesamt zwölf Reaktionsgefässe 2 über Verbindungsteile 25 und flexible Kupplungen 21 in Gewindelöcher 408 des unteren Reaktionsblockteils 431 geschraubt. Im unteren Reaktionsblockteil 431 sind ausserdem zwei Gaskanäle 432 angeordnet, über die den Reaktionsgefässen 2 Gas zugeführt oder entnommen und insbesondere ein Unter- oder Überdruck erzeugt werden kann.

Die einzelnen Schieberplatten 404 können drei verschiedene Funktionsstellungen einnehmen. In der in Fig. 15 dargestellten ersten Funktionsstellung sind die Reaktionsgefässe 2 geschlossen. In Nuten 441 in den Schieberplatten 404 angeordnete Dichtelemente 405 dichtenden Schaltblock 401 gegen aussen ab, gewährleisten also, dass kein Gas aus den Reaktionsgefässen 2 aus dem Schaltblock 401 entweicht.

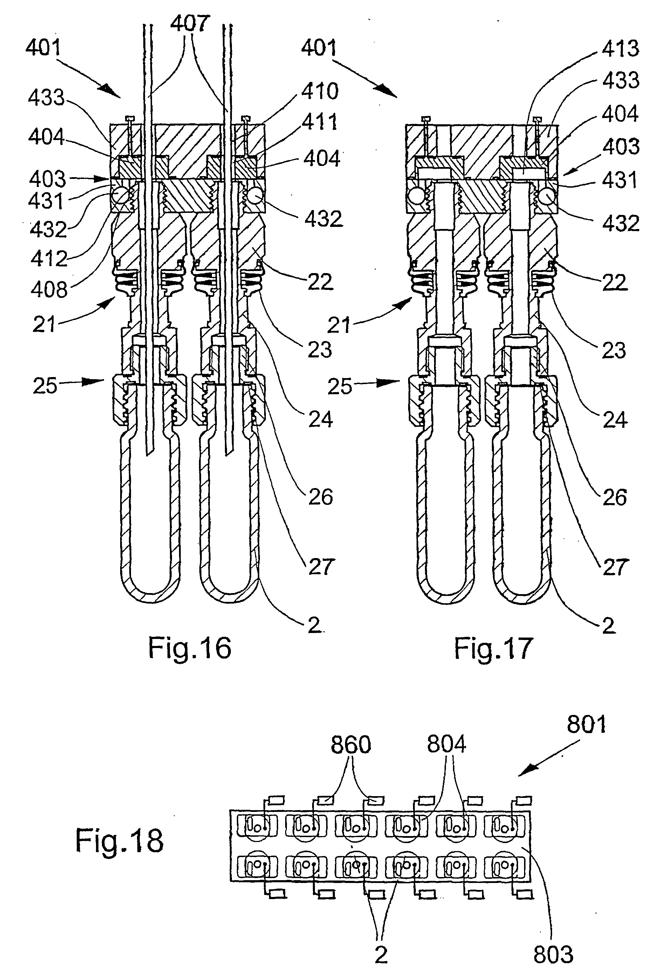

In der in Fig. 16 dargestellten zweiten Funktionsstellung sind die Reaktionsgefässe 2 offen. Durch ein Zugabe- und/oder Entnahmeloch 410 im oberen Reaktionsblockteil 433, ein durchgehendes Loch 411 in der Schieberplatte 404, ein gewindeloses Loch 412, das Gewindeloch 408, die flexible Kupplung 21 und das Verbindungsteil 25 ist jeweils ein Zugabe- und/oder Entnahmewerkzeug 107, hier eine Nadel, in die Reaktionsgefässe 2 eingeführt.

In der dritten Funktionsstellung, die in Fig. 17 dargestellt ist, kommunizieren die Reaktionsgefässe 2 jeweils über eine Vertiefung 413 in den Schieberplatten 404 mit jeweils einem der Gaskanäle 432. Den Reaktionsgefässen 2 kann so ein Gas zugegeben oder entnommen werden und sie können insbesondere mit einem Überdruck beaufschlagt oder es kann in ihnen ein Unterdruck erzeugt werden.

### Siebtes Ausführungsbeispiel - Figur 14

Im Unterschied zum sechsten Ausführungsbeispiel werden bei diesem Schaltblock 501 die im Reaktionsblock 503 angeordneten zwölf Schieberplatten 504 nicht alle gemeinsam betätigt, sondern es ist eine Betätigung in zwei Gruppen vorgesehen. Die Verstellung einer Gruppe der Schieberplatten 504 erfolgt jeweils mit einem Betätigungselement 506, das über eine Zahnstange 563 von einem Zahnrad 564 betätigt wird. Das Zahnrad 564 wird beispielsweise durch einen nicht dargestellten Schritt- oder Linearmotor angetrieben. Das Betätigungselement 506 umfasst eine mit der Zahnstange 563 verbundene Betätigungsstange 561, an der sechs dazu rechtwinklig verlaufende Querstangen 560 befestigt sind. Jeweils am nicht an der Betätigungsstange 561 angebrachten Ende jeder Querstange 560 ist je ein Betätigungszapfen angebracht, der jeweils mit einer.der Schieberplatten 504 verbunden ist.

Jeweils sechs Schieberplatten 504 können auf diese Weise. gemeinsam verstellt werden.

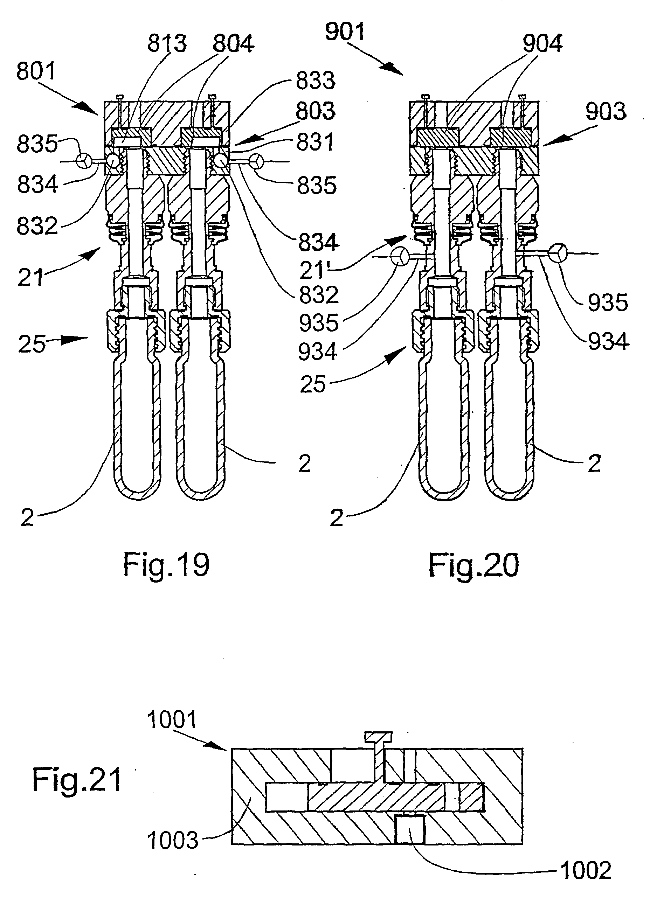

### Achtes Ausführungsbeispiel - Figuren 18 und 19

Im Unterschied zum sechsten Ausführungsbeispiel werden bei diesem Schaltblock 801 die im Reaktionsblock 803 angeordneten zwölf Schieberplatten 804 nicht alle gemeinsam betätigt, sondern jede Schieberplatte 804 wird mit einem eigenen Motor 860 verstellt. Der Reaktionsblock 803 setzt sich aus zwei Teilen 831 und 833 zusammen, die miteinander verschweisst sind. In zwei parallelen Reihen sind insgesamt zwölf Reaktionsgefässe 2 über Verbindungsteile 25 und flexible Kupplungen 21 in Gewindelöcher des unteren Reaktionsblockteils 831 geschraubt. Im unteren Reaktionsblockteil 831 sind zwölf Gaskanäle 832 angeordnet, für jedes Reaktionsgefäss 2 einer. Jeder Gaskanal 832 steht über eine Gasleitung 834 mit einem Mehrwegventil 835 in Verbindung, mit welchem die Zuführung oder Entnahme von Gas und insbesondere die Erzeugung eines Unter- oder Überdrucks im Reaktionsgefäss 2 individuell gesteuert werden kann.

Die einzelnen Schieberplatten 804 können wie beim sechsten Ausführungsbeispiel drei verschiedene Funktionsstellungen einnehmen. In der in Fig. 19 dargestellten dritten Funktionsstellung kommunizieren die Reaktionsgefässe 2 jeweils über eine Vertiefung 813 in den Schieberplatten 804 mit jeweils einem der Gaskanäle 832. Den Reaktionsgefässen 2 kann so ein Gas zugegeben oder entnommen werden und sie können insbesondere mit einem Überdruck beaufschlagt oder es kann in ihnen ein Unterdruck erzeugt werden.

Im übrigen gilt das zum sechsten Ausführungsbeispiel Gesagte.

### Neuntes Ausführungsbeispiel - Figur 20

Wie beim achten Ausführungsbeispiel werden bei diesem Schaltblock 901 die im Reaktionsblock 903 angeordneten zwölf Schieberplatten 904 jeweils mit einem eigenen Motor verstellt. Der Reaktionsblock 903 weist hier jedoch keine Gaskanäle und die Schieberplatten 904 weisen keine Vertiefungen auf. Die dritte Funktionsstellung entfällt. Dafür steht jedes Reaktionsgefäss 2 über die flexible Kupplung 21' und eine in diese mündende Gasleitung 934 mit einem Mehrwegventil 935 in Verbindung, mit welchem die Zuführung oder Entnahme von Gas und insbesondere die Erzeugung eines Unter- oder Überdrucks im Reaktionsgefäss 2 individuell gesteuert werden kann.

Die einzelnen Schieberplatten 904 nehmen entweder die dargestellte offene Funktionsstellung oder eine geschlossene Funktionsstellung ein, welche beide im Zusammenhang mit dem sechsten Ausführungsbeispiel beschrieben sind.

### Zehntes Ausführungsbeispiel - Figur 21

Im Unterschied zum zweiten Ausführungsbeispiel ist hier ein Reaktionsgefäss 1002 direkt in den Reaktionsblock 1003 des Schaltblocks 1001 integriert. Ansonsten gilt das zum zweiten Ausführungsbeispiel Gesagte.

Derartige integrierte Reaktionsgefässe können auch bei den anderen Ausführungsbeispielen anstelle der Reaktionsgefässe 2 vorgesehen sein.

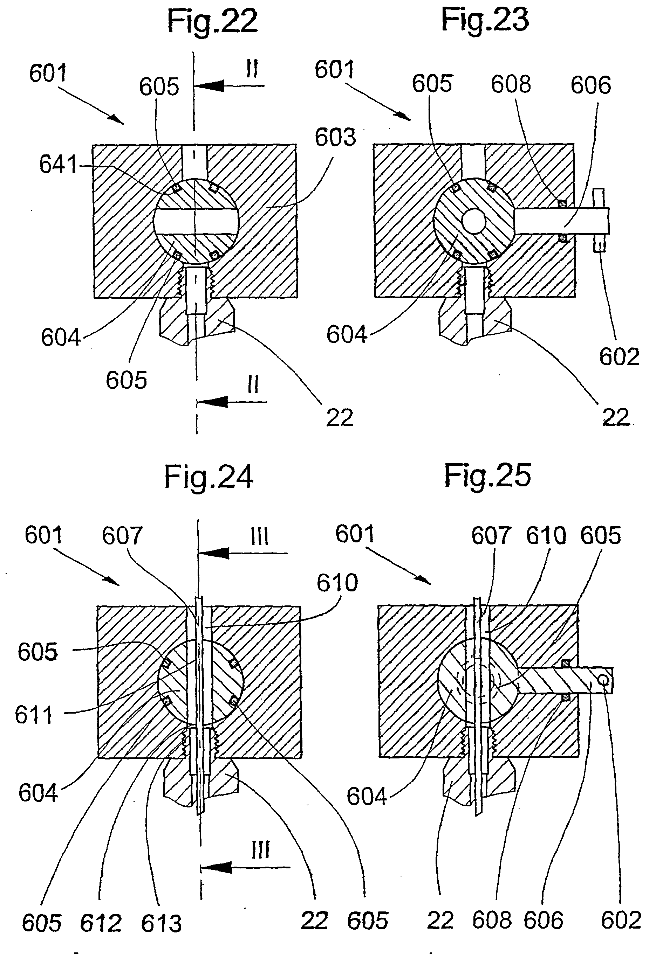

### Elftes Ausführungsbeispiel - Figuren 22 bis 25

Bei diesem elften Ausführungsbeispiel ist in einem Reaktionsblock 603 ein Funktionsteil in Form einer Kugel 604 drehbar angeordnet. Ein nicht dargestelltes Reaktionsgefäss 2 ist wie in den vorhergehenden Ausführungsbeispielen über ein Verbindungsteil und eine flexible Kupplung mit einem Oberteil 22 an den Reaktionsblock 603 geschraubt. Die Kugel 604 ist mittels eines mit einem Ansatzstift 602 versehenen Drehbolzens 606, der durch den Reaktionsblock 603 hindurch nach aussen ragt, verstellbar. Sie kann zwei Funktionsstellungen einnehmen.

In der in den Fig. 22 und 23 dargestellten ersten Funktionsstellung ist das Reaktionsgefäss 2 geschlossen. In Nuten 641 in der Kugel 604 angeordnete Dichtelemente 605 und ein weiteres, in einer Ringnut im Reaktionsblock 603 um den Drehbolzen 606 herum angeordnetes Dichtelement 608 dichten den Schaltblock 601 gegen aussen ab, gewährleisten also, dass kein Gas aus dem Reaktionsgefäss 2 aus dem Schaltblock 601 entweicht, falls der Druck im Reaktionsgefäss 2 grösser ist als der Druck ausserhalb des Schaltblocks 601.

In der in den Fig. 24 und 25 dargestellten zweiten Funktionsstellung ist das Reaktionsgefäss 2 offen. Durch ein Zugabe- und/oder Entnahmeloch 610 im Reaktionsblock 603, ein durchgehendes Loch 611 in der Kugel 604, ein gewindeloses Loch 612, ein Gewindeloch 613, die nur teilweise sichtbare flexible Kupplung 21 und das nicht dargestellte Verbindungsteil 25 ist ein Zugabe- und/oder Entnahmewerkzeug 607, hier eine Nadel, in das Reaktionsgefäss 2 eingeführt.

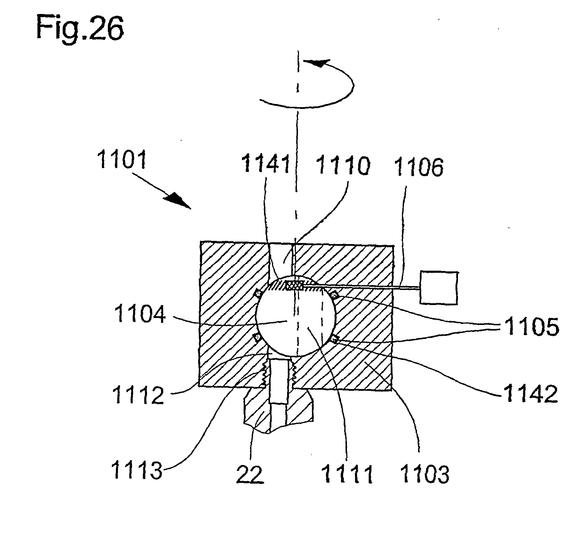

### Zwölftes Ausführungsbeispiel - Figur 26

Bei diesem zwölften Ausführungsbeispiel ist in einem Reaktionsblock 1103 ein Funktionsteil in Form einer Kugel 1104 drehbar angeordnet. Ein nicht dargestelltes Reaktionsgefäss 2 ist wie in den vorhergehenden Ausführungsbeispielen über ein Verbindungsteil und eine flexible Kupplung mit einem Oberteil 22 an den Reaktionsblock 1103 geschraubt. Die Kugel 1104 ist mit einem Zahnkranz 1141 versehen und darüber mittels einer Verstellspindel 1106 verstellbar, die durch den Reaktionsblock 1103 hindurch nach aussen ragt. Sie ist in der eingezeichneten Drehachse geführt, beispielsweise unten und oben durch einen Dorn.

Die Kugel 1104 kann zwei Funktionsstellungen einnehmen. In der dargestellten ersten Funktionsstellung ist das Reaktionsgefäss geschlossen. In Nuten II42 in der Kugel I104 angeordnete Dichtelemente 1105 dichten den Schaltblock 1101 gegen aussen ab, gewährleisten also, dass kein Gas aus dem Reaktionsgefäss 2 aus dem Schaltblock 1101 entweicht. Durch die Anordnung des Zahnkranzes 1141 oberhalb der beiden Dichtelemente 1105 setzt die Verstellspindel 1106 in einem über- und unterdruckfreien Bereich an der Kugel 1104 an und ihr Durchgang durch die Kugel 1104 braucht daher nicht noch. zusätzlich abgedichtet zu werden.

Nach Drehen der Kugel 1104 um 180° verbindet ein dezentral angeordnetes durchgehendes Loch 1111 in der Kugel 1104 ein Zugabe- und/oder Entnahmeloch 1110 im Reaktionsblock 1103 mit einem gewindelosen Loch 1112 und einem Gewindeloch 1113 im Reaktionsblock 1103, so dass ein nicht dargestelltes Zugabe- und/oder Entnahmewerkzeug in das Reaktionsgefäss einführbar ist.

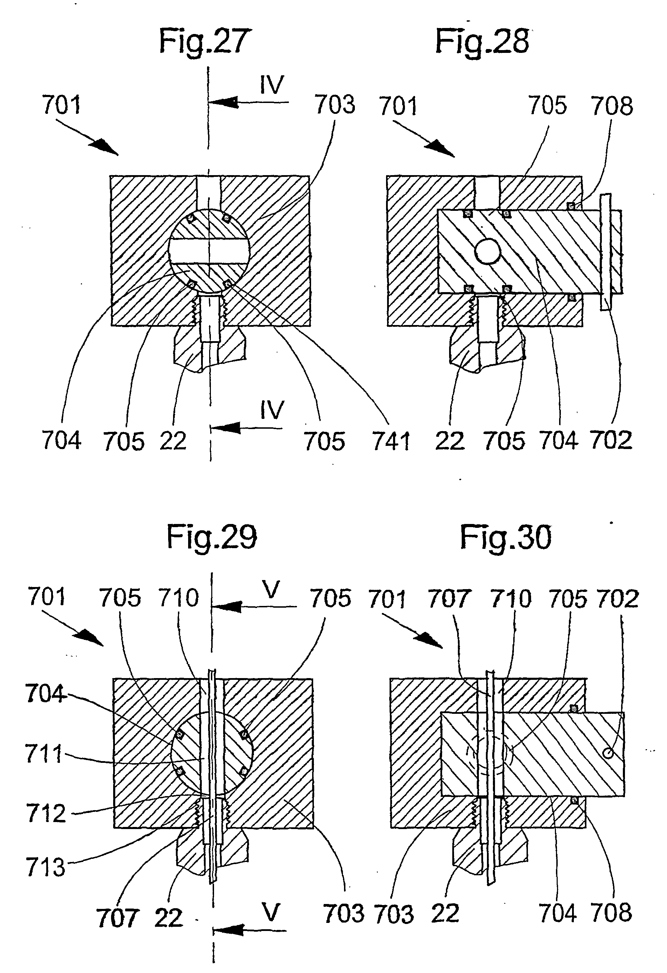

### Dreizehntes Ausführungsbeispiel - Figuren 27 bis 30

Bei diesem dreizehnten Ausführungsbeispiel ist in einem Reaktionsblock 703 ein Funktionsteil in Form eines Zylinders 704 drehbar angeordnet. Ein nicht dargestelltes Reaktionsgefäss 2 ist wie in den vorhergehenden Ausführungsbeispielen über ein Verbindungsteil und eine flexible Kupplung mit einem Oberteil 22 an den Reaktionsblock 703 geschraubt. Der Zylinder 704, der durch den Reaktionsblock 703 hindurch nach aussen ragt, ist über einen Ansatzstift 702 verstellbar. Er kann zwei Funktionsstellungen einnehmen.

In der in den Fig. 27 und 28 dargestellten ersten Funktionsstellung ist das Reaktionsgefäss 2 geschlossen. In Nuten 741 im Zylinder 704 angeordnete Dichtelemente 705 und ein weiteres, in einer Ringnut im Reaktionsblock 703 um den Zylinder 704 herum angeordnetes Dichtelement 708 dichten den Schaltblock 701 gegen aussen ab, gewährleisten also, dass kein Gas aus dem Reaktionsgefäss 2 aus dem Schaltblock 701 entweicht.

In der in den Fig. 29 und 30 dargestellten zweiten Funktionsstellung ist das Reaktionsgefäss 2 offen. Durch ein Zugabe- und/oder Entnahmeloch 710 im Reaktionsblock 703, ein durchgehendes Loch 711 in der Kugel 704, ein gewindeloses Loch 712, ein Gewindeloch 713, die nur teilweise sichtbare flexible Kupplung 21 und das nicht dargestellte Verbindungsteil 25 ist ein Zugabe- und/oder Entnahmewerkzeug 707, hier eine Nadel, in das Reaktionsgefäss 2 eingeführt.

Zu den vorbeschriebenen erfindungsgemässen Schaltblöcken mit Reaktionsgefässen sind weitere konstruktive Variationen realisierbar. Hier ausdrücklich erwähnt seien noch:
- Die Schieberplatten 4; 104; 204; 304; 404; 504; 804; 904, die drehbaren Kugeln 604; 1104 oder der drehbare Zylinder 704 könnten aus einem elastischen bzw. weichen Material, beispielsweise Gummi, oder aus Graphit sein, so dass zusätzliche Dichtelemente überflüssig werden.
- Die einzelnen Schieberplatten 404, 504 bzw. 804 der Schaltblöcke 401, 501 bzw. 801 müssen bezüglich Funktionalitätsmuster nicht zwingendermassen gleich ausgebildet sein und können unterschiedliche Funktionsstellungen aufweisen.

## Patentansprüche

1. Schaltblock (1;101;201;301;401;501;601;701; 801; 901;1001;II0I) mit mindestens zwei daran angebrachten oder integrierten Reaktionsgefässen (2;1002), wobei der Schaltblock einen Reaktionsblock (31,32,33;103;203;303;403;503; 603;703;803;903;1003;1103) und ein darin angeordnetes Funktionsteil (4;104;204;304;404;504;604;704;804;904;1004; 1104) umfasst, das mindestens zwischen einer offenen und einer geschlossenen Stellung verstellbar ist, wobei in der offenen Stellung ein Zugriff auf mindestens eines der Reaktionsgefässe (2;1002) in gerader Linie möglich ist, **dadurch gekennzeichnet, dass** der Reaktionsblock entweder einteilig ausgebildet ist oder mindestens zwei das Funktionsteil einschliessende, miteinander druckdicht verbundene Teile umfasst und in der geschlossenen Stellung des Funktionsteils das mindestens eine der Reaktionsgefässe durch den Schaltblock druckdicht verschlossen ist, wobei bei einem überoder Unterdruck im Reaktionsgefäss das Funktionsteil durch diesen Über- oder Unterdruck gegen den Reaktionsblock gedrückt oder an diesen gesogen wird.

2. Schaltblock (1;101;201;301;401;501;601;701;801; 901;1001;1101) nach Anspruch 1, **dadurch gekennzeichnet, dass** das Funktionsteil (4;104;204;304;404;504;604;704;804; 904;1004;1104) im Reaktionsblock (31,32,33;103;203;303;403; 503;603;703;803;903:1003;1103) mit Spiel angeordnet ist, so dass es bei Normaldruck auf mindestens einer Seite, vorzugsweise der dem mindestens einen der Reaktionsgefässe (2; 1002) abgewandten Seite, nicht gasdicht am Reaktionsblock anliegt.

3. Schaltblock (1;101;201;301;401;501;801;901; 1001) nach Anspruch 1 oder 2, **dadurch gekennzeichnet, dass** das Funktionsteil eine verschiebbare Schieberplatte (4;104; 204;304;404;504;804;904;1004) ist.

4. Schaltblock (601;701;1101) nach Anspruch 1 oder 2, **dadurch gekennzeichnet, dass** das Funktionsteil eine drehbare Kugel (604;1104) oder ein drehbarer Zylinder (704) ist.

5. Schaltblock (1) nach einem der Ansprüche 1 bis 4, **dadurch gekennzeichnet, dass** der Reaktionsblock (31,32, 33;403;803;903) aus zwei oder mehr Teilen, vorzugsweise auseinandernehmbar, zusammengesetzt ist, zwischen denen das Funktionsteil (4;404;804;904) angeordnet ist, vorzugsweise aus einer Reaktionsplatte (31) und einer Gegenplatte (32), zwischen denen das Funktionsteil (4) sandwichartig angeordnet ist, und einem Halteprofil (33), das über die Reaktionsplatte (31) und die Gegenplatte (32) geschoben ist und diese zusammenhält.

6. Schaltblock (1;101;201;301;401;501;601;701;801; 901;1001;1101) nach einem der Ansprüche 1 bis 5, **dadurch gekennzeichnet, dass** zwischen Reaktionsblock (31,32,33;103; 203;303;403;503;603;703;803;903;1003;1103) und Funktionsteil (4;104;204;304;404;504;604;704;804;904;1004;1104) mindestens ein Dichtelement (5;105;205;305;405;605;705;805; 1005;1105), vorzugsweise aus Kunststoff, Gummi oder einem gummiähnlichen Material, insbesondere einem polyfluorierten Elastomer, angeordnet ist, vorzugsweise in Nuten (41;141; 241;341;441;641;741;841;1041;1141) im Funktionsteil.

7. Schaltblock (1;101;201;301;401;501;801;901; I00I) nach einem der Ansprüche I bis 6, **dadurch gekennzeichnet, dass** mindestens auf der einen Seite die aneinander anliegenden Flächen des Funktionsteils (4;104;204; 304;404;504;804;904;1004) und des Reaktionsblocks (31,32, 33;103;203;303;403;503;803;903;1003) so präzise ausgebildet sind, dass die Flächen dicht aneinander anliegen, wobei die Flächen vorzugsweise mit Fett, Öl oder Teflonspray behandelt sind und wobei die aneinander anliegenden Flächen vorzugsweise kleiner sind als die ganzen einander zugewandten Seiten.

8. Schaltblock (1;101;201;301;401;501;601;801;901; 1001;1101) nach einem der Ansprüche 1 bis 7, **dadurch gekennzeichnet, dass** zur Verstellung des Funktionsteils (4; 104;204;304;404;504;604;804;904;1004;1104) dieses mit einem sich durch den Reaktionsblock (32,33;103;203;303;403;503; 603;803;903;1003;1103) hindurch nach aussen erstreckenden Betätigungselement (61,62;106;206;306;406;506;606;1106) verbunden ist, wobei das Betätigungselement vorzugsweise in einem über- und unterdruckfreien Bereich am Funktionsteil ansetzt.

9. Schaltblock (1;101;201;301;401;501;601;701;801; 901;1001;1101) nach einem der Ansprüche 1 bis 8, **dadurch gekennzeichnet, dass** in der offenen Stellung des Funktionsteils (4;104;204;304;404;504;604;704;804;904:1004;1104) ein Zugabe- und/oder Entnahmewerkzeug (107;407;607;707) und/oder eine Sonde von oben her durch den Schaltblock hindurch in das mindestens eine der Reaktionsgefässe (2;1002) einführbar ist.

10. Schaltblock (1;201;401;501;801) nach einem der Ansprüche 1 bis 9, **dadurch gekennzeichnet, dass** im Reaktionsblock (31;203;403;503;803) mindestens ein Gaskanal (311;231;432;832) angeordnet ist, mit dem in einer Stellung des Funktionsteils (4;204;404;504;804) ein oder mehrere Reaktionsgefässe (2) über das Funktionsteil kommunizieren, so dass sie über den Gaskanal mit Gas beaufschlagbar oder in ihnen über den Gaskanal ein Über- oder Unterdruck erzeugbar ist.

11. Schaltblock (1) nach Anspruch 10, **dadurch gekennzeichnet, dass** das Funktionsteil (4) in eine Stellung verstellbar ist, in der mindestens ein Reaktionsgefäss geschlossen ist und mindestens ein Reaktionsgefäss mit dem Gaskanal (311) kommuniziert.

12. Schaltblock (1) nach einem der Ansprüche 1 bis 11, **dadurch gekennzeichnet, dass** einem Funktionsteil (4) parallel mindestens 2, vorzugsweise mindestens 10 Reaktionsgefässe zugeordnet sind.

13. Schaltblock (401;501;801;901) nach einem der Ansprüche 1 bis 12, **dadurch gekennzeichnet, dass** im Reaktionsblock (403;503;803;903) mehrere Funktionsteile (404; 504;804;904) angeordnet sind, denen jeweils mindestens ein Reaktionsgefäss (2) zugeordnet ist, wobei die Funktionsteile (404;504;804;904) einzeln, gemeinsam oder in Gruppen betätigbar sind.

## Claims

1. A switch block (1; 101; 201; 301; 401; 501; 601; 701; 801; 901; 1001; 1101) having at least two attached or integrated reaction vessels (2; 1002), the switch block comprising a reaction block (31, 32, 33; 103; 203; 303; 403; 503; 603; 703; 803; 903; 1003; 1103) and, arranged within it, a functional part (4; 104; 204; 304; 404; 504; 604; 704; 804; 904; 1004; 1104) which can at least be adjusted between an open and a closed position, access in straight line to at least one of the reaction vessels (2; 1002) being possible in the open position, **characterized in that** the reaction block is configured in one piece or else comprises at least two parts, which enclose the functional part and are connected to one another in a pressure-tight manner, and the at least one of the reaction vessels is sealed in a pressure-tight manner by the switch block in the closed position of the functional part, the functional part being pressed against or drawn onto the reaction block by the positive pressure or depression when there is a positive pressure or depression in the reaction vessel.

2. The switch block (1; 101; 201; 301; 401; 501; 601; 701; 801; 901; 1001; 1101) as claimed in claim 1, **characterized in that** the functional part (4; 104; 204; 304; 404; 504; 604; 704; 804; 904; 1004; 1104) is arranged with clearance in the reaction block (31, 32, 33, 103; 203; 303; 403; 503; 603; 703; 803; 903; 1003; 1103) so that it is not in gas-tight contact with the reaction block on at least one side, preferably the side remote from the at least one of the reaction vessels (2; 1002), at normal pressure.

3. The switch block (1; 101; 201; 301; 401; 501; 801; 901; 1001) as claimed in claim 1 or 2, **characterized in that** the functional part is a displaceable slide plate (4; 104; 204; 304; 404; 504; 804; 904; 1004).

4. The switch block (601; 701; 1101) as claimed in claim 1 or 2, **characterized in that** the functional part is a rotatable ball (604; 1104) or a rotatable cylinder (704).

5. The switch block (1) as claimed in one of claims 1 to 4, **characterized in that** the reaction block (31, 32, 33; 403; 803; 903;) is made up of two or more parts, which can preferably be taken apart and between which the functional part (4; 404; 804; 904) is arranged, preferably of a reaction plate (31) and a mating plate (32) between which the functional part (4) is sandwiched, and a retention profile section (33), which is pushed over the reaction plate (31) and the mating plate (32) and holds them together.

6. The switch block (1; 101; 201; 301; 401; 501; 601; 701; 801; 901; 1001; 1101) as claimed in one of claims 1 to 5, **characterized in that** at least one sealing element (5; 105; 205; 305; 405; 605; 705; 805; 1005; 1105), preferably made of plastic, rubber or a rubber-like material, in particular a polyfluoridated elastomer, is arranged between the reaction block (31, 32, 33, 103; 203; 303; 403; 503; 603; 703; 803; 903; 1003; 1103) and the functional part (4; 104; 204; 304; 404; 504; 604; 704; 804; 904; 1004; 1104), preferably in grooves (41; 141; 241; 341; 441; 641; 741; 841; 1041; 1141) in the functional part.

7. The switch block (1; 101; 201; 301; 401; 501; 801; 901; 1001) as claimed in one of claims 1 to 6, **characterized in that** the mutually contacting surfaces of the functional part (4; 104; 204; 304; 404; 504; 804; 904; 1004) and the reaction block (31, 32, 33, 103; 203; 303; 403; 503; 803; 903; 1003) are configured, on at least one side, in such a precise manner that the surfaces are in sealing contact with one another, the surfaces being preferably treated with grease, oil or Teflon spray and the mutually contacting surfaces being preferably smaller than the complete sides facing toward one another.

8. The switch block (1; 101; 201; 301; 401; 501; 601; 801; 901; 1001; 1101) as claimed in one of claims 1 to 7, **characterized in that**, in order to adjust the functional part (4; 104; 204; 304; 404; 504; 604; 804; 904; 1004; 1104), the latter is connected to an actuation element (61, 62; 106; 206; 306; 406; 506; 606; 1106), which extends through the reaction block (32, 33; 103; 203; 303; 403; 503; 603; 803; 903; 1003; 1103) to the outside, the actuation element being preferably placed on the functional part in a region which is not subjected to positive pressure and depression.

9. The switch block (1; 101; 201; 301; 401; 501; 601; 701; 801; 901; 1001; 1101) as claimed in one of claims 1 to 8, **characterized in that**, in the open position of the functional part (4; 104; 204; 304; 404; 504; 604; 704; 804; 904; 1004; 1104), a supply and/or removal tool (107; 407; 607; 707) and/or a probe can be introduced from above through the switch block into the at least one of the reaction vessels (2; 1002).

10. The switch block (1; 201; 401; 501; 801) as claimed in one of claims 1 to 9, **characterized in that** at least one gas duct (311; 231; 432; 832) is arranged in the reaction block (31, 203; 403; 503; 803), with which gas duct (311; 231; 432; 832) one or a plurality of reaction vessels (2) communicate via the functional part (4; 204; 404; 504; 804) in one position of the latter, so that they can be subjected to gas via the gas duct or a positive pressure or a depression can be generated in them via the gas duct.

11. The switch block (1) as claimed in claim 10, **characterized in that** the functional part (4) can be adjusted into a position in which at least one reaction vessel is closed and at least one reaction vessel communicates with the gas duct (311).

12. The switch block (1) as claimed in one of claims 1 to 11, **characterized in that** at least two, preferably at least ten, reaction vessels are associated in parallel with a functional part (4).

13. The switch block (401; 501; 801; 901) as claimed in one of claims 1 to 12, **characterized in that** a plurality of functional parts (404; 504; 804; 904) are arranged in the reaction block (403; 503; 803; 903), at least one reaction vessel (2) being associated with each functional part (404; 504; 804; 904) and it being possible to actuate the functional parts (404; 504; 804; 904) individually, jointly or in groups.

## Revendications

1. Bloc de commutation (1 ; 101 ; 201 ; 301 ; 401 ; 501 ; 601 ; 701 ; 801 ; 901 ; 1001 ; 1101) comportant au moins deux récipients de réaction associés ou intégrés (2 ; 1002), moyennant quoi le bloc de commutation comprend au moins un bloc de réaction (31, 32, 33 ; 103 ; 203 ; 303 ; 403 ; 503 ; 603 ; 703 ; 803 ; 903 ; 1003 ; 1103) et un élément de fonction (4 ; 104 ; 204 ; 304 ; 404 ; 504 ; 604 ; 704 ; 804 ; 904 ; 1004 ; 1104) logé à l'intérieur de ce dernier, lequel est au moins réglable entre une position d'ouverture et une position de fermeture, moyennant quoi dans la position d'ouverture un accès en ligne droite à au moins l'un des récipients de réaction (2 ; 1002) est possible, **caractérisé en ce que** le bloc de réaction est soit configuré en une partie, soit il comprend au moins deux pièces renfermant l'élément de fonction, reliées entre elles de manière étanche au gaz sous pression, et dans la position de fermeture de l'élément de fonction, l'au moins un des récipients de réaction est fermé par le bloc de commutation de manière étanche sous pression, moyennant quoi, en cas de surpression ou de sous-pression dans le récipient de réaction, l'élément de fonction est pressé contre le bloc de réaction ou tiré contre celui-ci par l'effet de cette surpression ou sous-pression.

2. Bloc de commutation (1 ; 101 ; 201 ; 301 ; 401 ; 501 ; 601 ; 701 ; 801 ; 901 ; 1001 ; 1101) selon la revendication 1, **caractérisé en ce que** l'élément de fonction (4 ; 104 ; 204 ; 304 ; 404 ; 504 ; 604 ; 704 ; 804 ; 904 ; 1004 ; 1104) est disposé dans le bloc de réaction (31, 32, 33 ; 103 ; 203 ; 303 ; 403 ; 503 ; 603 ; 703 ; 803 ; 903 ; 1003 ; 1103) avec du jeu, de sorte qu'en cas de pression normale il repose sur au moins un côté, de préférence sur le côté opposé à l'un au moins des récipients de réaction (2 ; 1002), contre le bloc de réaction de manière non étanche au gaz.

3. Bloc de commutation (1 ; 101 ; 201 ; 301 ; 401 ; 501 ; 801 ; 901 ; 1001) selon l'une des revendications 1 ou 2, **caractérisé en ce que** l'élément de fonction est une plaque de tiroir translatable (4 ; 104 ; 204 ; 304 ; 404 ; 504 ; 804 ; 904 ; 1004).

4. Bloc de commutation (601 ; 701 ; 1101) selon l'une des revendications 1 ou 2, **caractérisé en ce que** l'élément de fonction est une boule pouvant pivoter (604 ; 1104) ou un cylindre pouvant pivoter (704).

5. Bloc de commutation (1) selon l'une quelconque des revendications 1 à 4, **caractérisé en ce que** le bloc de réaction (31, 32, 33 ; 403 ; 803 ; 903) est constitué de deux ou de plusieurs parties, de préférence démontables, entre lesquelles est disposé l'élément de fonction (4 ; 404 ; 804; 904), de préférence d'une plaque de réaction (31) et d'une contre-plaque (32), entre lesquelles l'élément de fonction (4) est disposé en sandwich et d'un profilé de retenue (33) qui est enfilé par-dessus la plaque de réaction (31) et la contre-plaque (32) et qui maintient ces dernières ensemble.

6. Bloc de commutation (1 ; 101 ; 201 ; 301 ; 401 ; 501 ; 601 ; 701 ; 801 ; 901 ; 1001 ; 1101) selon l'une quelconque des revendications 1 à 5, **caractérisé en ce qu'**entre le bloc de réaction (31, 32, 33 ; 103 ; 203 ; 303 ; 403 ; 503 ; 603 ; 703 ; 803 ; 903 ; 1003 ; 1103) et l'élément de fonction (4 ; 104 ; 204 ; 304 ; 404 ; 504 ; 604 ; 704 ; 804 ; 904 ; 1004 ; 1104) est disposé au moins un élément d'étanchéité (5 ; 105 ; 205 ; 305 ; 405 ; 605 ; 705 ; 805 ; 1005 ; 1105), de préférence en matière synthétique, en caoutchouc ou en matériau analogue au caoutchouc, en particulier un élastomère polyfluoré, de préférence dans des rainures (41 ; 141 ; 241 ; 341 ; 441 ; 641 ; 741 ; 841 ; 1041 ; 1141) dans l'élément de fonction.

7. Bloc de commutation (1 ; 101 ; 201 ; 301 ; 401 ; 501 ; 801 ; 901 ; 1001) selon l'une quelconque des revendications 1 à 6, **caractérisé en ce qu'**au moins sur ce côté, les surfaces apposées l'une contre l'autre de l'élément de fonction (4 ; 104 ; 204 ; 304 ; 404 ; 504 ; 804 ; 904 ; 1004) et du bloc de réaction (31, 32, 33 ; 103 ; 203 ; 303 ; 403 ; 503 ; 803 ; 903 ; 1003) sont configurées avec une telle précision que les surfaces reposent l'une sur l'autre de façon étanche, moyennant quoi les surfaces sont de préférence traitées avec de la graisse, de l'huile ou un spray téflon et moyennant quoi les surfaces apposées l'une contre l'autre sont de préférence plus petites que tous les côtés se faisant face.

8. Bloc de commutation (1 ; 101 ; 201 ; 301 ; 401 ; 501 ; 601 ; 801 ; 901 ; 1001 ; 1101) selon l'une quelconque des revendications 1 à 7, **caractérisé en ce que** pour le réglage de l'élément de fonction (4 ; 104 ; 204 ; 304 ; 404 ; 504 ; 604 ; 804 ; 904 ; 1004 ; 1104) celui-ci est relié à un élément d'actionnement (61 ; 62 ; 106 ; 206 ; 306 ; 406 ; 506 ; 606 ; 1106) s'étendant à travers le bloc de réaction (32, 33 ; 103 ; 203 ; 303 ; 403 ; 503 ; 603 ; 803 ; 903 ; 1003 ; 1103) vers l'extérieur, moyennant quoi l'élément d'actionnement fait suite à l'élément de fonction, de préférence dans une zone exempte de surpression ou de sous-pression.

9. Bloc de commutation (1 ; 101 ; 201 ; 301 ; 401 ; 501 ; 601 ; 701 ; 801 ; 901 ; 1001 ; 1101) selon l'une quelconque des revendications 1 à 8, **caractérisé en ce que** dans la position d'ouverture de l'élément de fonction (4 ; 104 ; 204 ; 304 ; 404 ; 504 ; 604 ; 704 ; 804 ; 904 ; 1004 ; 1104) un outil d'addition et/ou de soutirage (107 ; 407 ; 607 ; 707) et/ou une sonde peuvent être introduits par le haut à travers le bloc de commutation dans l'au moins un récipient de réaction (2 ; 1002).

10. Bloc de commutation (1 ; 201 ; 401 ; 501 ; 801) selon l'une quelconque des revendications 1 à 9, **caractérisé en ce que** dans le bloc de réaction (31, 203 ; 403 ; 503 ; 803) est disposé au moins un conduit de gaz (311 ; 231 ; 432 ; 832) avec lequel communiquent, dans une position de l'élément de fonction (4 ; 204 ; 404 ; 504 ; 804) un ou plusieurs récipients de réaction (2), par l'intermédiaire de l'élément de fonction, de sorte que du gaz peut leur être injecté par l'intermédiaire du conduit de gaz ou qu'une surpression ou une sous-pression peut être générée à l'intérieur de ces derniers par l'intermédiaire du conduit de gaz.

11. Bloc de commutation (1) selon la revendication 10, **caractérisé en ce que** l'élément de fonction (4) est réglable dans une position dans laquelle au moins un récipient de réaction est fermé et au moins un récipient de réaction communique avec le conduit de gaz (311).

12. Bloc de commutation (1) selon l'une quelconque des revendications 1 à 11, **caractérisé en ce qu'**au moins 2, de préférence au moins 10 récipients de réaction sont associés en parallèle avec un élément de fonction (4).

13. Bloc de commutation (401 ; 501 ; 801 ; 901) selon l'une quelconque des revendications 1 à 12, **caractérisé en ce que** plusieurs éléments de fonction (404 ; 504 ; 804 ; 904) sont disposés dans le bloc de réaction (403 ; 503 ; 803 ; 903), auxquels sont chacun associés au moins un récipient de réaction (2), moyennant quoi les éléments de fonction (404 ; 504 ; 804 ; 904) peuvent être actionnés individuellement, en commun ou par groupes.
